# EUROPÄISCHE PATENTSCHRIFT

(11) **EP 1 162 787 B1**
(45) Veröffentlichungstag und Bekanntmachung des Hinweises auf die Patenterteilung: **19.10.2005**
(21) Anmeldenummer: 01113997.9
(22) Anmeldetag: 08.06.2001
(51) Int. Cl.: H04L 12/44

(54) **Einrichtung zum Anschluss von Geräten an ein Datenleitungsnetz**
Arrangement for connecting devices to a data network
Dispositif pour connecter des appareils à un réseau de données

(30) Priorität: 10.06.2000 DE 10028830
(43) Veröffentlichungstag der Anmeldung: 12.12.2001
(73) Patentinhaber: Merten GmbH & Co. KG, 51674 Wiehl (DE)
(72) Erfinder: Ludolf, Wilhelm S., Dr., D-72622 Nürtingen (DE); Kuhnert, Jürgen, Dipl.-Ing., D-51702 Bergneustadt (DE)
(74) Vertreter: Selting, Günther

(56) Entgegenhaltungen:
- WO-A-91/13504
- WO-A-98/54901
- US-A- 4 985 892
- US-A- 5 815 794

## Beschreibung

Die Erfindung bezieht sich auf ein Datenleitungsnetz zum Anschluss von Geräten zur Datenübertragung zwischen wenigstens zwei Geräten, die geräteseitig einen unidirektionalen Dateneingang und einen unidirektionalen Datenausgang enthält und datenleitungsseitig einen Anschluss für eine bidirektional benutzbare Datenleitung aufweist.

Leitungsnetze zur Datenübertragung (>1Mbit/s) erfordern eine durchgängige Planung und sorgfältige Verlegung der Datenleitungen (HF- Gesichtspunkte).

Alle Leitungen müssen wellenwiderstandskonform abgeschlossen werden, andernfalls entstehen Signalreflexionen. Das verlegte Leitungsnetzwerk wird in der Regel eingemessen und offiziell abgenommen.

Netzwerke zu Steuerungszwecken (Gebäudeautomatisierung) arbeiten in der Regel bei sehr viel niedrigeren Bitraten, hier sind sogenannte "Baumstrukturen" in der Verlegung üblich und zulässig. Diese Verlegeart hat zur Folge, dass höherfrequente Übertragungen aufgrund des HF-Verhaltens der Baumstruktur nicht möglich sind. (Vergleiche Abschlußbericht Inhouse-Netze der TH München, Lehrstuhl für Integrierte Schaltungen vom 19/11/99). Ein Betreiben dieser Netze bei Bitraten um oder über 1Mbit/s ist nur unter großem apparativen Aufwand möglich und wirtschaftlich nicht sinnvoll. (In der Studienarbeit werden hier adaptive Regelsysteme und ein sehr aufwendiger Filteralgorithmus bei jedem Teilnehmer vorgeschlagen).

Hochbitratige TP-Kabelsysteme (TP-Twisted Pair) enthalten jeweils ein getrenntes Adernpaar für jede Richtung, d.h. ankommende und abgehende Daten werden auf unterschiedlichen Adernpaaren geführt. Die Verkabelungsstruktur ist eine Stern-Struktur, d.h. zwischen dem Verteiler (Hub oder Switch) und dem Teilnehmer gibt es keine weitere Abzweigung mehr. Bisher ist es bei Datennetzen mit höheren Bitraten nicht üblich, ein einziges Adernpaar einer TP-Verkabelung für bidirektionale Datenverbindungen zu nutzen. (Netze wie EIB, LON, ASI, CAN usw. werden bei niedrigeren Bitraten betrieben).

LWL-Verkabelungen werden dort eingesetzt, wo entweder größere Entfernungen zu überwinden sind, oder durch den Ausschluss elektromagnetischer Störungen eine hohe Übertragungssicherheit gewährleistet werden soll. Hier handelt es sich in der Regel um Punkt-zu-Punkt-Verbindungen. Für jede Transportrichtung der Daten wird ein eigener LWL (Lichtwellenleiter) zur Verfügung gestellt. (Die technisch mögliche Lösung, hin- und rücklaufende Wellen durch geeignete Filter zu trennen und auf diese Weise mit nur einem Lichtwellenleiter auszukommen, rechnet sich bisher für normale Anwendungen in diesem Bereich nicht!)

Aus DE 39 36 894 A1 ist eine Multiplex-Schaltungsanordnung für Verbraucherstationen in Kraftfahrzeugen bekannt, bei der ein bidirektionales Busankoppelnetzwerk vorgesehen ist. Dabei erfolgt keine Richtungserkennung und es ist auch keine richtungsabhängige Einkopplung der Daten möglich.

Ein Datenleitungsnetz, von dem der Oberbegriff des Patentanspruchs 1 ausgeht, ist beschrieben in WO 98/54901. Bei diesem Datenleitungsnetz sind zahlreiche Wandadapter vorgesehen, die bidirektionale Dateneingänge und Datenausgänge für den Anschluss externer Geräte aufweisen. Von den Wandadaptem führen bidirektionale Leitungen zu einem Hub, weicher eine Zentrale bildet. Das Datenleitungsnetz ist also sternförmig auf die Zentrale zentriert. Jegliche Kommunikation zwischen Geräten erfolgt über die zugehörigen Wandadapter der betreffenden Geräte, die ihrerseits mit der Zentrale verbunden sind. Die Zentrale kann an ein externes Datennetzwerk angeschlossen werden.

Die Aufgabe der Erfindung besteht darin, ein Datenleitungsnetz der eingangs genannten Art zu schaffen, das eine automatische Umschaltung zwischen Vollduplexbetrieb und Halbduplexbetrieb des Datenverkehrs zwischen zwei Geräten ermöglicht.

Die Aufgabe wird erfindungsgemäß durch die in Anspruch 1 aufgeführten Maßnahmen gelöst. Weiterbildungen sind in den Unteransprüchen beschrieben.

Dabei ist zu unterscheiden, ob die Geräte untereinander direkt mit Datenleitungen verbunden sind und miteinander in beide Richtungen kommunizieren oder ob ein über Knoten vernetztes Datenleitungsnetz zur Verfügung steht, an deren Zweigenden die Geräte über entsprechende Anschlusseinrichtungen anschließbar sind.

Im letzten Fall kann die an sich sehr komplizierte und nicht standardisierbare Verkabelungsstruktur dadurch standardisiert und extrem vereinfacht werden, indem alle Verbindungen innerhalb eines Datennetzes auf definierte Punkt-zu-Punkt-Verbindungen reduziert werden.

Das kann dadurch erreicht werden, indem eine Baumstruktur zu einer Struktur mit reinen Punkt-zu-Punkt-Verbindungen aufgebrochen wird.

Die Erfindung sieht u.a. Verbindungsknoten für Datennetzzweige vor, welche Mittel zum Erkennen der Datenrichtung von Daten auf der Datenleitung sowie Mittel zum richtungsabhängigen Verteilen der Daten enthalten, und ferner Mittel enthalten, die verhindern, dass die empfangenen Daten zurück in die Datenleitung reflektiert werden.

Bei einem aktiven Knoten sind vorteilhaft Sendeverstärker, Empfangsverstärker und gegebenenfalls jeweils eine Pulsformung bzw. einen Equalizer für den Sende- und Empfangszweig vorgesehen. Die genannten Komponenten können als Baueinheit ausgeführt sein, beispielsweise als Zweifach, -Dreifach,- Vierfach- und n-fach Knoten an den Verzeigungsstellen des Datennetzes in Dosen eingebaut werden.

Ferner sind vorteilhaft an den Endpunkten des Datennetzes Anschlussknoten für Geräte vorgesehen, die Mittel zum Erkennen der Datenrichtungen enthalten, mit denen ein bidirektional benutzter Leitungszweig des Datennetzes und zwei jeweils unidirektional genutzten Leitungen koppelbar sind.

Dadurch lässt sich ein durchgängiges Wellenwiderstandsniveau sicherstellen.

Verzweigungen oder Zusammenführungen von mehr als zwei Leitungssegmenten können in einem aktiven Knoten realisiert werden, der Schnittstellen zu den Leitungen enthält und die Daten über ein Koppelfeld verteilt.

In einer erweiterten Ausführung ist es möglich, durch eine Koppelfeldsteuerung, z.B. durch den EIB Bus, aktiv Einfluss auf die Signalverteilung zu nehmen. Dadurch ist eine bevorzugte Kommunikation zwischen Busteilnehmern in besonderen Situationen möglich, wobei je nach Netzstruktur auch mehrere schnellere Datenverbindungen parallel geschaltet werden können.

In einer bereits verkabelten Umgebung kann nahezu jeder Punkt erreicht werden. Als Transportmittel (Datenleitung) steht aber oft nur die "übriggebliebene" Zweidrahtleitung (das 2. Adernpaar) zur Verfügung. Das anzuschließende Endgerät erwartet jedoch ein Adernpaar für die Hin- und eines für die Rückleitung. Mit der zwischengeschalteten Verteileinrichtung werden die bidirektional benutzte Zweidrahtleitung auf der Netzseite mit den beiden jeweils unidirektional genutzten Zweidrahtleitungen auf der Teilnehmerseite sinnfällig verbunden. Es kann sich hierbei um einen Richtungsdiskriminator (Separator) handeln.

Die Trennung bzw. Zusammenführung der Ausbreitungsrichtungen der elektrischen Signale auf der Leitung erfolgt nach den bekannten Prinzipien der Gabelschaltung.

Durch diese Technik wird es möglich, Reflexionen und Echos wirksam zu verhindern. Deshalb kann so ein völlig "transparentes Netzwerk" geschaffen werden, das keinerlei Restriktionen bezüglich Protokollen unterliegt. Damit sind die bekannten Verfahren zur Kollisionserkennung und -vermeidung in vollem Umfang anwendbar.

Vorhandene EIB-Strukuren, die mit dem EIB- Installationskabel ausgeführt sind, können auf dem 2. Adernpaar durch diese Technik höherbitratige Daten führen. Dadurch eröffnen sich bei festgelegter Kabelstruktur (auch nachträglich) noch die Möglichkeiten, datenintensivere Verbindungen aufzubauen, als sie im EIB-Rahmen möglich gewesen wären. Die Verbindungsknoten, ausgestattet mit einem Richtungsdiskriminator (Separator) stellen nach außen ein völlig transparentes Netzwerk zur Verfügung, das sich für den Datenverkehr so verhält, wie man es in Lokalen Netzwerken mit höheren Bitraten gewohnt ist.

Die Knoten mit einem Richtungsdiskriminator (Separator) können auf der Teilnehmerseite zum Anschluss eines Endgerätes eingesetzt werden, vorteilhafterweise wird der Knoten dann in einer üblichen UP-Kombination mit standardisiertem Datenstecker eingebaut sein, oder aber auf der "Verteilseite", z.B. im Verteilerschrank, um vorhandene TP-Zweidrahtleitungen an einen Standard-Hub anzuschließen.

Denkbar ist auch eine spezielle Variante der Hubs oder Switche zu schaffen, bei denen der Richtungsdiskriminator im Gerät bereits integriert ist ("REG-Hub")

Dieses "neue Netzwerk" soll sich in der Außenbeschaltung so verhalten, wie man es von den eingeführten Datennetzen gewohnt ist, d.h. das Verhalten der in einer Verkabelung vorkommenden Standardkabeltypen muss bekannt sein und integriert werden können.

Die typischen Verkabelungsstrukturen von Datennetzwerken enthalten unterschiedlich aufgebauten Kabeltypen.

Koaxialleitungssysteme werden in einer Art Durchschleiftechnik eingesetzt. D.h. das durchlaufende Kabel wird an den Teilnehmer herangeführt, hochohmig abgegriffen und weitergeführt. An Leitungsanfang und -ende muss das Leitungselement wellenwiderstandsrichtig abgeschlossen werden. Auf ein und demselben physikalischen "Adernpaar" (Innen und Außenleiter) laufen die Daten sowohl in Vorwärtsrichtung wie in Rückwärtsrichtung gleichzeitig. Die Verkabelungsstruktur ist hier eine Busstruktur.

Für den Fall, dass Verbindungen zwischen einzelnen Gebäuden realisiert, oder elektromagnetisch verseuchte Räume bedient werden müssen, empfiehlt es sich, Lichtwellenleiter einzusetzen. Der oben angeführte Richtungsdiskriminator (Separator) trennt auch hier die Sende- von der Empfangsrichtung und ermöglicht so das Ansteuern der Sendemodule bzw. das Anschließen der Empfängermodule einer LWL- Übertragungsstrecke. D.h. er bildet den wesentlichen Teil eines Umsetzers von der Zweidrahtleitung zum Lichtwellenleiter.

Gemäß einer Weiterbildung der Erfindung ist zusätzlich zum Datennetz des Datenbusses ein weiteres Datennetz für einen Steuerbus vorgesehen, wobei die Verteileinrichtung des Knotens eine Steuerung zum Freischalten wenigstens eines Leitungszweiges des Datennetzes des Datenbusses enthält, an die das Datennetz des Steuerbusses angeschlossen ist, um eine schnelle Verbindung zwischen zwei Geräten direkt herzustellen.

Beispielsweise kann mit einer Modussteuerung wahlweise ein Halbduplexbetrieb oder ein Vollduplexbetrieb durchgeführt werden. Die Modussteuerung kann Bestandteil der Freischalteinrichtung sein, die in jeder Anschlußknoten und Verbindungsknoten enthalten sind und über den Steuerbus angesteuert wird, beispielsweise den Sende-Verstärker der Knoten in den Halbduplex- bzw. Vollduplex- Modus versetzt.

Nachfolgend sind an Hand der Zeichnungen zwei Ausführungsbeispiele der Erfindung näher beschrieben.

Es zeigen:
- FIG.1: die schematische Darstellung eines Datenbusses mit einem über Knoten verzweigten Datennetz,
- FIG.2: eine Variante des Datenbusses nach FIG.1,
- FIG.3: die schematische Darstellung eines Knotens,
- FIG.4: die schematische Darstellung der Schnittstelle eines Verbindungsknotens,
- FIG.4a: die schematische Darstellung der Schnittstelle eines Knotens,
- FIG.5: die schematische Darstellung der Verteileinrichtung des Knotens,
- FIG.6: eine Variante der Verteileinrichtung nach FIG.5.

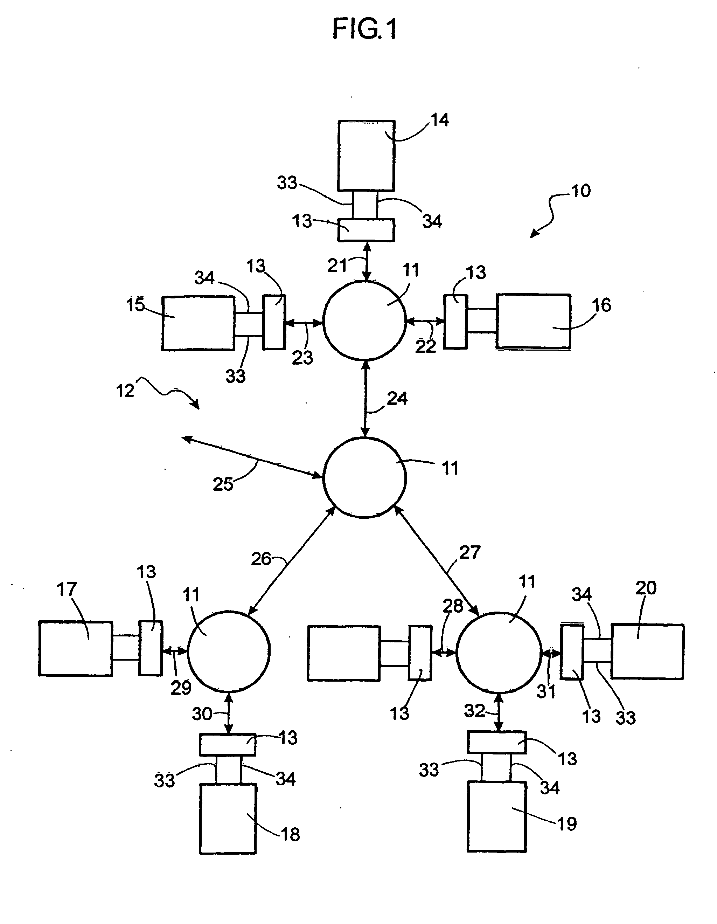

Die Figur 1 der Zeichnungen zeigt einen Datenbus 10 mit einem über Verbindungsknoten 11 verzweigten analogen oder digitalen Hochfrequenz- Datennetz 12. An den Endpunkten des Datennetzes 12 sind Anschlussknoten 13 für Geräte 14, 15, 16, 17, 18, 19 , 20 (Bus-teilnehmer) angeschlossen, die untereinander einen Datenverkehr in beiden Richtungen durchführen können. Beispielsweise kann es sich bei den Geräten 14- 20 um Sensoren und Aktoren handeln, die untereinander kommunizieren. Ferner kann es sich bei dem Gerät 14 um ein Multi-Media-Gerät, z.B. eine Videokamera handeln, die über das Datennetz 12 Videosignale an ein Gerät 18 überträgt, das ein Monitor ist, der Videobilder empfängt. Die Knoten 11 sind reflexionsfrei an die Leitungszweige angeschlossen. Jeder Knoten 11 enthält wenigstens eine Schnittstelle 36, 37, 38, 39 sowie eine Verteileinrichtung 35. Die Trennung bzw. Zusammenführung der Ausbreitungsrichtungen der elektrischen Signale kann nach dem Prinzip einer Gabelschaltung erfolgen.

Wie aus Figur 1 hervorgeht, besteht das Datennetz 12 aus Datennetzzweigen 21, 22, 23, 24 25, 25, 26, 27, 28, 29, 30, 31, 32. Der Datenverkehr des Gerätes 14 zum Gerät 18 läuft somit über drei Knoten 11. Mit jedem Knoten 11 sind beispielsweise drei oder vier Netzzweige zusammengeführt. Bei den Netzzweigen 21-32 handelt es sich um bidirektional benutzte Zweidrahtleitungen, an denen Anschlussknoten 13 anschließbar sind. Der Anschluss der Geräte 14- 19 an die Anschlussknoten 13 erfolgt jeweils über eine unidirektional genutzte Zweidrahtleitung 33 für die Hinleitung und eine unidirektional genutzte Zweidrahtleitung 34 für die Rückleitung. Geräte mit einer bidirektionalen Leitung können über eine zusätzliche Schaltungseinrichtung angeschlossen werden.Mit den Knoten 11 erfolgt eine Verknüpfung der Datennetzzweige 21 bis 32 zu einem "schnellen Datennetz" 12; das heißt, ein Datennetz in Baumstruktur mit einer an sich niedrigen Datenübertragungsrate wird durch die Verwendung von aktiven oder passiven Knoten 11 zu einem Datennetz mit einer hohen Datenübertragungsrate >1 Mbit/s, so dass beispielsweise Videoübertragungen möglich sind.

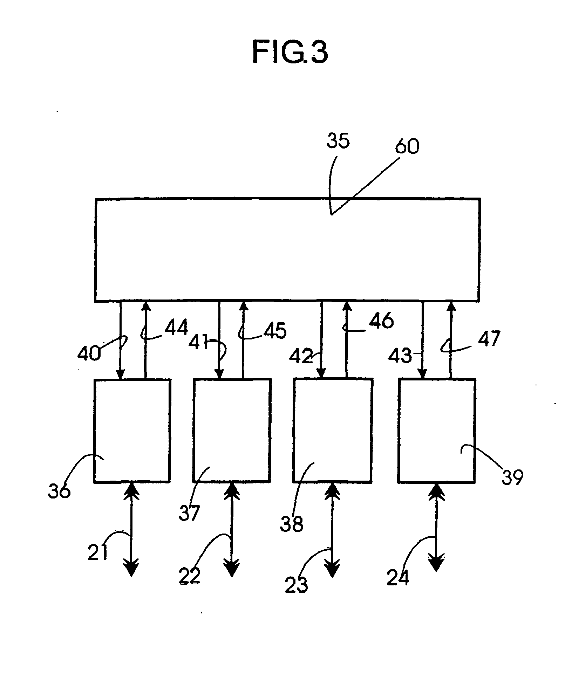

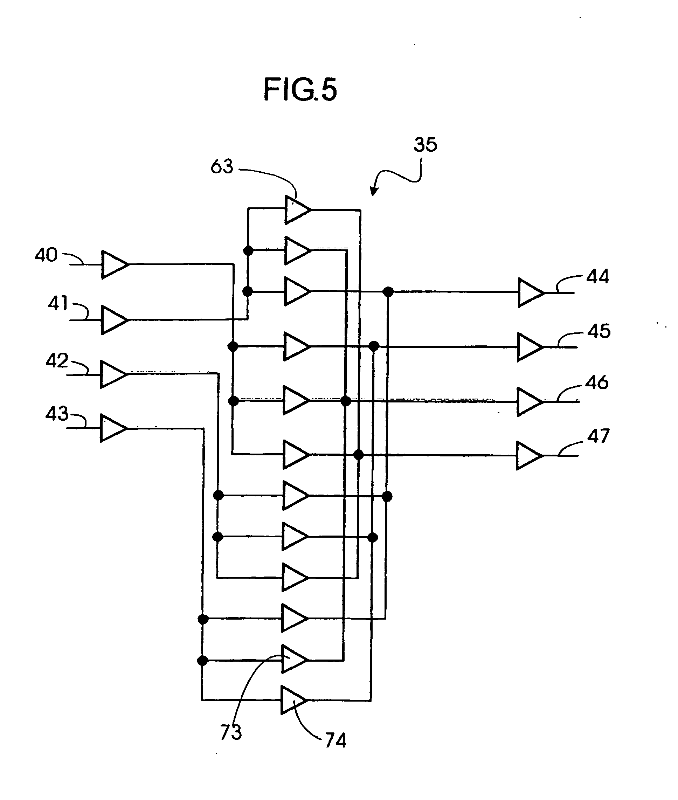

Die Figur 3 der Zeichnung zeigt die Komponenten einer Ausführung eines Knotens 11. Dieser Knoten weist Schnittstellen 36, 37, 38, 39 auf, die über Ein- und Ausgänge 40, 41, 42, 43; 44, 45, 46, 47 mit einer Verteileinrichtung 35 verbunden sind. Bei der Verteileinrichtung 35 kann es sich um ein aktives oder passives Koppelfeld gemäß Figur 5 handeln.

Insgesamt sind vier Schnittstellen 36, 37, 38, 39 vorhanden, die jeweils gleich aufgebaut sind. Der Knoten 11 ist dementsprechend für den Anschluss von vier Datenleitungszweigen 21, 22, 23, 24 ausgeführt (4-fach Knoten). Selbstverständlich können mehr oder weniger Schnittstellen vorgesehen werden, die einen 2-fach, 3-fach oder 5-fach Knoten bilden.

Die Schnittstellen 36, 37, 38, 39 enthalten Mittel 48 zum Erkennen der Datenrichtung von durchlaufenden Daten, z.B. Datentelegrammen. In Abhängigkeit von der Datenrichtung erfolgt die Aufteilung des Datenstromes mit der Verteileinrichtung 35 auf die Datenleitungszweige. Wenn z.B. Daten über den Leitungszweig 21 in den Knoten 11 ankommen, werden sie auf die Leitungszweige 22, 23, 24 verteilt.

Wie Figur 5 am besten zeigt, werden beispielsweise die über den Eingang 40 ankommenden Daten auf die Ausgänge 45, 46, 47 verteilt, nicht jedoch in den Ausgang 44 der Schnittstelle 36.

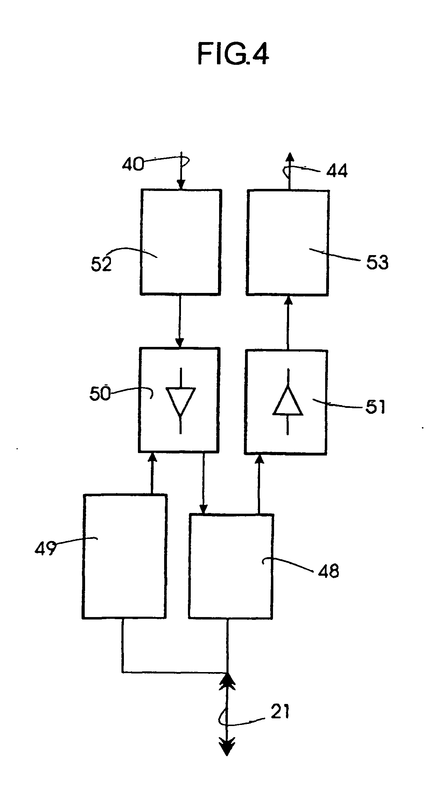

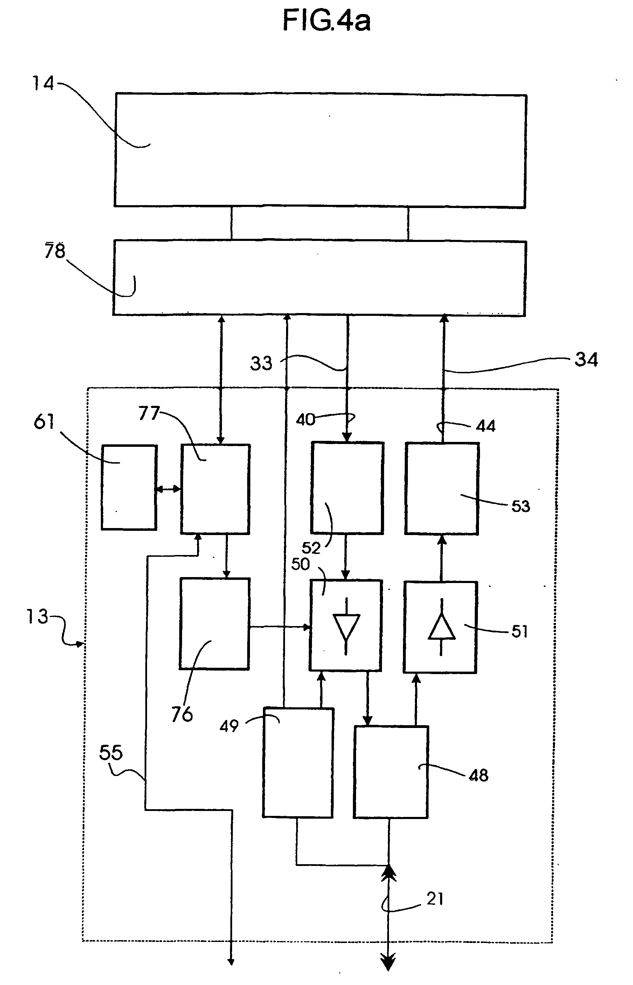

Die Figur 4 zeigt eine einzelne aktive Schnittstelle 36. Die übrigen Schnittstellen 37, 38, 39 können den gleichen Aufbau haben. Im einzelnen besteht die Schnittstelle 36 aus der Datenrichtungserkennungs-Schaltung 48, einer Betriebsbereitschaftserkennungs-Schaltung 49, beispielsweise einer Leitungsfehlerabschlusserkennungsschaltung, mit der erkannt wird, ob z.B. ein Leitungszweig 25 defekt ist oder ob an dem Leitungszweig ein Gerät 14 oder 20 angeschlossen ist oder nicht. Wird ein Leitungsfehlabschluss erkannt, koppelt die Leitungsfehlerabschlusserkennungsschaltung 49 diesen Leitungszweig 25 vom Datennetz 12 ab, so dass Mehrfachreflexionen und Echos nicht in das Datennetz 12 eingespeist werden.

Die Schnittstelle 36 weist ferner einen Sende- und Empfangsverstärker 50, 51 sowie eine Senderpulsformstufe 52 und eine Empfängerpulsformstufe 53 auf.

Die Figur 4a zeigt die schematische Darstellung des Anschlussknotens 13. Es handelt sich hier um eine aktive Schnittstelle, die im wesentlichen die gleichen Komponenten enthält wie die Schnittstellen 36, 37, 38, 39 der Knoten 11, nämlich eine Datenrichtungserkennungs-Schaltung 48, eine Betriebsbereitschaftserkennungs-Schaltung 49, beispielsweise einer Leitungsfehlerabschlusserkennungsschaltung, mit der erkannt wird, ob z.B. ein Leitungszweig 25 defekt ist oder ob an dem Leitungszweig ein weiterer Anschlussknoten 13 oder ein Verbindungsknoten 11 angeschlossen ist oder nicht. Wird ein Leitungsfehlabschluss erkannt, koppelt die Leitungsfehlerabschlusserkennungsschaltung 49 diesen Leitungszweig 25 vom Datennetz 12 ab, so dass Mehrfachreflexionen und Echos nicht in das Datennetz 12 eingespeist werden. Im Gegensatz zu den Schnittstellen 36 - 39 ist an den Eingang 40 die unidirektionale Zweidrahtleitung 33 und an den Ausgang 44 die unidirektionale Zweidrahtleitung 34 angeschlossen, an denen die Geräte 14 bis 20 anschließbar sind.

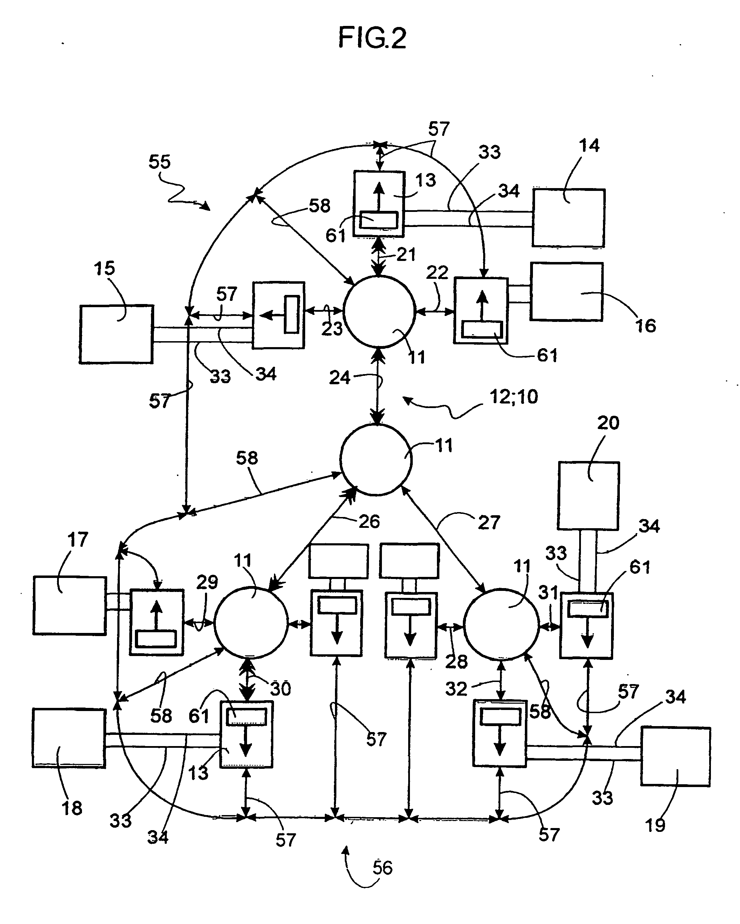

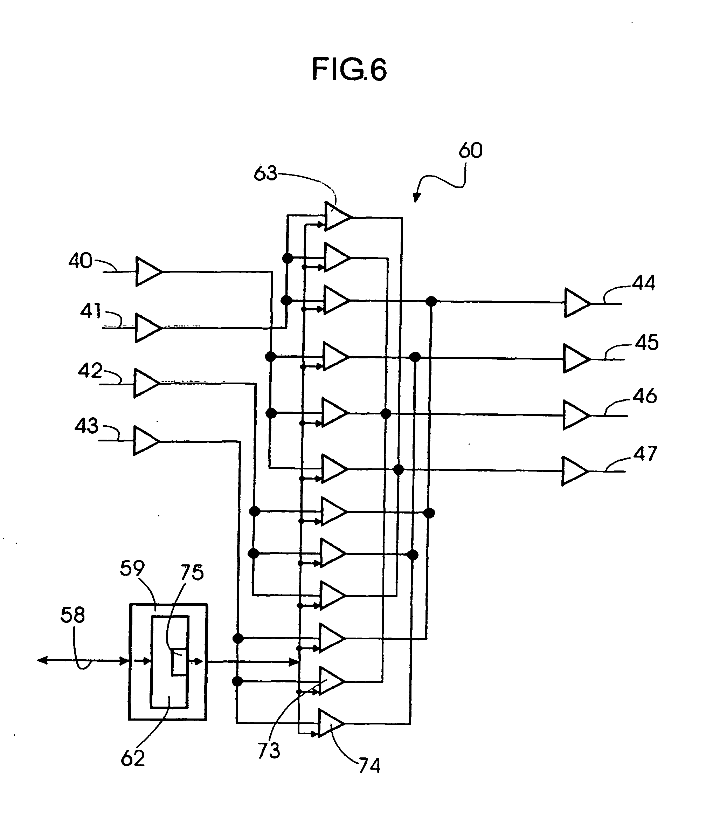

Die Figur 2 der Zeichnungen zeigt eine Variante des Datennetzes gemäß Figur 1. Diese Variante nach Figur 2 erlaubt beispielsweise zwischen den Geräten 14 und 18 eine Breitbandübertragung mit Freischaltung des benötigten Übertragungsweges. Die Freischaltung des Übertragungsweges erstreckt sich im Ausführungsbeispiel über die Leitungszweige 21, 24, 26 und 30, wobei diese Leitungsnetzzweige von den anderen Leitungszweigen separiert werden. Für diesen Zweck ist zusätzlich zum Datennetz 12 des Datenbusses 10 ein Datennetz 55 für einen Steuerbus 56 vorgesehen. Das Datennetz 55 ist über Leitungsnetzzweige 57 an die Anschlussknoten 13 über Leitungsnetzzweige 58 an eine Steuerung 59 der Verteileinrichtung 60 des Knotens 11 angeschlossen (FIG.6). Die Steuerung 59 dient zum Freischalten eines Leitungsnetzzweiges 21, 22, 23, 24, 24, 25, 26, 27, 28, 29, 30, 31, 32.

Für die Anschlussknoten 13 ist eine Schnittstellensteuerung 78 vorhanden an welche die Geräte 14 bis 20 anschließbar sind. Die Schnittstellensteuerung 78 enthalten eine Auswahlfunktion für Freischaltung und Moduswahl. Die Schnittstellensteuerung 78 aktiviert Datenbuszugriffsberechtigungsmittel 61, mit denen über das Datennetz des Steuerbusses 56 Steuerdaten an die Freischaltsteuerungen 59 der Knoten 11 gesendet werden. Diese Steuerdaten, bei denen es sich um Datentelegramme handeln kann, enthalten eine Nachricht für die Freischaltsteuerung 59. Die Freischaltsteuerung 59 enthält eine Auswerteeinrichtung 62 zum Steuern der Schaltelemente 63 bis 74 der Verteileinrichtung 60. Auf der Grundlage der Nachricht erkennt die Auswerteeinrichtung 62 welche der Schaltelemente 63 bis 74 aktiviert werden sollen und steuert die Aktivierungsmittel 75 für das betreffende Schaltelement.

Die Anschlussknoten 13 gemäß FIG.4a sind zugeschnitten auf einen Datenbus wie er in FIG.2 beschrieben ist. Der Anschlussknoten 13 (FIG.4a) enthält neben den bereits hinreichend beschriebenen Komponenten 48, 49, 50, 51, 52, 53 noch eine Modussteuerung 76 sowie eine Auswerteeinrichtung 77 für die Modussteuerung 76.

Die Modussteuerung 76 ermöglicht es, bei freigeschalteter Datenleitung 21, 24, 26 30 zwischen den Geräten 14 und 18 einen Vollduplexbetrieb zu aktivieren. Modussteuerungen 76 und Auswerteeinrichtungen 77 können in jedem Anschlussknoten 13 enthalten sein, so dass wahlweise Geräte 14 bis 20 wahlweise in Halbduplexbetrieb oder Vollduplexbetrieb arbeiten können.

Zum Freischalten dient wie bereits beschrieben die Steuerung 59. Die Schnittstellensteuerung 78 aktiviert außer der bereits beschriebenen Freischaltung noch die Modussteuerung 76 ,mit Hilfe der Auswerteeinrichtung 77. Je nach Moduswahl erhält die Auswerteeinrichtung 77 von der Schnittstellensteuerung 78 einen Befehl, der in Form einer Nachricht über das Datennetz 55 im gewählten Beispiel an den Anschlussknoten 13 des Gerätes 18 übertragen und von dessen Auswerteeinrichtung 77 empfangen wird. Diese Nachricht wird als Befehl an die Modussteuerung 76 weitergeleitet, die den Sendekanal 50, 52 in den Halb- oder Vollduplexbetrieb versetzt. Ferner wird der Befehl von der Auswerteeinrichtung 77 an die Geräteschnittstelle 78 des Gerätes 18 übermittelt, die eine Übertragung in Halb- oder Vollduplex ermöglicht.

Der Befehl der Geräteschnittstelle 78 des Gerätes 14 wird ferner von der Auswerteeinrichtung 77 direkt an die Modussteuerung 76 übermittelt, die den Sendekanal 50, 52 des Anschlussknotens 13 des Gerätes 14 in den Halb- oder Vollduplexbetrieb versetzt.

Es sei noch erwähnt, dass gemäß FIG.4a die Betriebsbereitschaftserkennungsschaltung 49 direkt mit der Schnittstellensteuerung 78 verbunden ist, so dass eventuell auftretende Störungen des Datenbusses oder der Geräte erkannt werden.

Bei dem Datennetz 56 für den Steuerbus 55 kann es sich um das EIB-Netz, das LON-Netz oder ein anderes geeignetes Netz handeln. Der Vorteil bei vorhandenen EIB-Strukturen besteht darin, dass das 2. Adernpaar als schnelles Datennetz 12 fungieren kann. Das originäre EIB- Netz kann die Funktion des Steuerbusses 55 übernehmen.

## Patentansprüche

1. Datenleitungsnetz (12) zur Datenübertragung zwischen wenigstens zwei Geräten (14, 15, 16, 17, 18, 19, 20) mit geräteseitigem unidirektionalen Dateneingang (40) und Datenausgang (44), mit Datennetzzweigen, (21 bis 32), die über Verbindungsknoten (11) vernetzt sind und Anschlussknoten (13) für Geräte (14 bis 20) enthalten, wobei die Verbindungsknoten (11) Mittel (48) zum Erkennen der Datenrichtungen von durchlaufenden Daten und Verteileinrichtungen (35, 60) zum richtungsabhängigen Verteilen der auf einem Datennetzzweig ankommenden Daten enthalten, die verhindern, dass die auf einem Datennetzzweig einlaufenden Daten wieder in diesen Datennetzzweig eingekoppelt werden, und mindestens ein Anschlussknoten (13) mit einem datenleitungsseitigen Anschluss für eine bidirektional benutzbare Datenleitung enthalten ist, der Mittel (48) zum Erkennen der Datenrichtungen von einlaufenden Daten und zum Koppeln des bidirektionalen Datennetzzweiges (21 bis 32) mit den beiden unidirektional genutzten Leitungen (33, 34) enthält
**dadurch gekennzeichnet,**
**dass** der Anschlussknoten (13) eine Modussteuerung (76) für Vollduplex- und Halbduplexbetrieb enthält, die Mittel zur Steuerung des Sende-Kanals (50.52) des Anschlussknotens (13) oder des Verbindungsknotens (11) in Abhängigkeit einer empfangenen Nachricht vom Gerät (14) enthält.

2. Datenleitungsnetz enthalten nach Anspruch 1, **dadurch gekennzeichnet, dass** ein Steuerbus (56) ist, und dass die Verteileinrichtungen (60) eine Steuerung (59) zum Freischalten wenigstens eines Datennetzzweiges (21, 24, 26, 30) des Datennetzes (12) enthalten, an die der Steuerbus (56) angeschlossen ist.

3. Datenleitungsnetz nach Anspruch 2, **dadurch gekennzeichnet, dass** wenigstens zwei Geräte (14, 17) über Anschlussknoten (13) an den Steuerbus (56) angeschlossen sind, und der Anschlussknoten (13) Mittel enthält, mit denen in Abhängigkeit einer Zugriffsberechtigungseinrichtung (61) über den Steuerbus (56) Steuerdaten an die Freischaltsteuerung (59) des Knotens (11) gesendet werden.

4. Datenleitungsnetz nach einem der Ansprüche 2 bis 3, **dadurch gekennzeichnet, dass** die auf den Steuerbus (56) übertragenen Steuerdaten eine auf der Zugriffsberechtigungseinrichtung (61) basierende Nachricht für die Freischaltsteuerung (59) enthalten.

5. Datenleitungsnetz nach einem der Ansprüche 2 bis 4, **dadurch gekennzeichnet, dass** die Freischaltsteuerung (59) Mittel (62) zur Überwachung der auf den Steuerbus (56) übertragenen Steuerdaten aufweist, die eine Nachricht für die Freischaltsteuerung enthalten, sowie Mittel zum Steuern eines Schaltelementes (63 bis 74) der Verteileinrichtung auf Grund der Nachricht und Mittel (75) zum Aktivieren des Schaltelementes.

6. Datenleitungsnetz nach Anspruch 1, **dadurch gekennzeichnet, dass** die Verbindungsknoten (11) Mittel (49) zum Erkennen der Betriebsbereitschaft eines Datennetzzweiges und Mittel zum Abkoppeln des Datennetzzweiges in Abhängigkeit von der Betriebsbereitschaft enthalten.

7. Datenleitungsnetz nach Anspruch 1 oder 2, **dadurch gekennzeichnet, dass** die Anschlussknoten (13) und Verbindungsknoten (11) Mittel (50, 51) zum Verstärken der verteilten Daten enthalten.

## Claims

1. A data network (12) for data transmission between at least two devices (14,15,16,17,18,19,20) each comprising a device-side unidirectional data input (40) and a data output (44), said data network comprising data network branches (21 to 32) which are networked via interconnection nodes (11) and include connecting nodes (13) for devices (14 to 20), wherein the interconnection nodes (11) comprise means (48) for detecting the data directions of passing data, and distributor means (35,60) for direction-dependent distribution of the data arriving on a data network branch, said distributor means preventing that the data arriving on a data network branch are again coupled into this data network branch, and wherein at least one connecting node (13) with a data-line-side connector for a bidirectionally operable data line is included, said at least one connecting node (13) comprising means (48) for detecting the data directions of passing data and for coupling the bidirectional data network branch (21 to 32) to the two unidirectionally used lines (33,34),
**characterized in**
**that** the connecting node (13) comprises a modus control means (76) provided for full-duplex and half-duplex operation and including means for controlling the transmitting channel (50,52) of the connecting node (13) or the interconnection nodes (11) in dependence on a received message from the device (14).

2. The data network according to claim 1, **characterized in that** a control bus (56) is included and that the distributor means (60) include a control means (59) provided for releasing at least one data network branch (21,24,26,30) of the data network (12) and having the control bus (56) connected thereto.

3. The data network according to claim 2, **characterized in that** at least two devices (14,17) are connected to the control bus (56) via connecting nodes (13) and that the connecting node (13) comprises means for transmitting control data to said release control means (59) of said node (11) through the control bus (56) in dependence on an access authorization means (61).

4. The data network according to any one of claims 2 to 3, **characterized in that** the control data transmitted on the control bus (56) include a message which is provided for the release control means (59) and is based on the access authorization means (61).

5. The data network according to any one of claims 2 to 4, **characterized in that** the release control means (59) comprises means (62) for monitoring the control data transmitted on the control bus (56) which include a message for the release control means, as well as means for controlling a switching element (63 to 74) of the distributor means based on said message, and means (75) for activating the switching element.

6. The data network according to claim 1, **characterized in that** the interconnection nodes (11) include means (49) for detecting the operational readiness of a data network branch and means for decoupling the data network branch in dependence on the operational readiness.

7. The data network according to claim 1 or 2, **characterized in that** the connecting nodes (13) and the interconnection nodes (11) include means (50,51) for amplifcation of the distributed data.

## Revendications

1. Réseau de lignes de données (12) pour la transmission de données entre au moins deux appareils (14, 15, 16, 17, 18, 19, 20), comprenant une entrée de données (40) et une sortie de données (44) unidirectionnelles côté appareil, comprenant des branches de réseau de données (21 à 32) reliées via des noeuds de liaison (11) et contenant des noeuds de connexion (13) pour les appareils (14 à 20), les noeuds de liaison (11) contenant des moyens (48) permettant de détecter les directions de données traversant le réseau ainsi que des dispositifs de répartition (35, 60) pour répartir en fonction de leur direction les données arrivant sur une branche du réseau de données, et permettant d'empêcher que les données entrant sur une branche du réseau de données soient de nouveau couplées sur cette branche de réseau de données, et au moins un noeud de connexion (13) comprenant une connexion côté ligne de données pour une ligne de données utilisable de façon bidirectionnelle étant présent et contenant des moyens (48) permettant de détecter les directions des données entrantes et de coupler la branche du réseau de données bidirectionnelle (21 à 32) avec les deux lignes utilisables de façon unidirectionnelle (33, 34), **caractérisé en ce que** le noeud de connexion (13) contient une commande de mode (76) pour un fonctionnement en duplex intégral et en semi-duplex, qui contient des moyens de commande du canal d'émission (50, 52) du noeud de connexion (13) ou du noeud de liaison (11) en fonction d'un message reçu à partir de l'appareil (14).

2. Réseau de lignes de données selon la revendication 1, **caractérisé en ce qu'**un bus de commande (56) est présent et les dispositifs de répartition (60) contiennent une commande (59) pour déconnecter au moins une branche (21, 24, 26, 30) du réseau de données (12) à laquelle est connecté le bus de commande (56).

3. Réseau de lignes de données selon la revendication 2, **caractérisé en ce qu'**au moins deux appareils (14, 17) sont connectés au bus de commande (56) via des noeuds de connexion (13), et le noeud de connexion (13) contient des moyens permettant d'envoyer des données de commande via le bus de commande (56) à la commande de déconnexion (59) du noeud (11) en fonction d'un dispositif d'autorisation d'accès (61).

4. Réseau de ligne de données selon l'une quelconque des revendications 2 et 3, **caractérisé en ce que** les données de commande transmises sur le bus de commande (56) contiennent un message basé sur le dispositif d'autorisation d'accès (61) pour la commande de déconnexion (59).

5. Réseau de ligne de données selon l'une quelconque des revendications 2 à 4, **caractérisé en ce que** la commande de déconnexion (59) présente des moyens (62) de surveillance des données de commande transmises sur le bus de commande (56) qui contiennent un message pour la commande de déconnexion, ainsi que des moyens de commande d'un élément de commutation (63 à 74) du dispositif de répartition sur la base du message et des moyens (75) d'activation de l'élément de commutation.

6. Réseau de lignes de données selon la revendication 1, **caractérisé en ce que** les noeuds de liaison (11) contiennent des moyens (49) de détection de la disponibilité opérationnelle d'une branche du réseau de données et des moyens de découplage de la branche du réseau de données en fonction de la disponibilité opérationnelle.

7. Réseau de lignes de données selon la revendication 1 ou 2, **caractérisé en ce que** les noeuds de connexion (13) et les noeuds de liaison (11) contiennent des moyens (50, 51) pour amplifier les données réparties.
